# EUROPEAN PATENT APPLICATION

(11) **EP 1 693 478 A2**
(43) Date of publication of application: **23.08.2006**
(21) Application number: 06250820.5
(22) Date of filing: 16.02.2006
(51) Int. Cl.: C23C 4/08, C23C 28/00

(54) **Diffusion barrier for assemblies with metallic and silicon containing components and method therefor**

(30) Priority: 18.02.2005 US 906405
(71) Applicant: The General Electric Company, Schenectady NY 12345 (US)
(72) Inventor: Luthra, Krishan Lal, Schenectady, New York 12309 (US); McKee, Douglas William, Burnt Hills, New York 12027 (US)
(74) Representative: Bedford, Grant Richard

(57) **Abstract**

A method for inhibiting diffusion of silicon into a support structure (14) from a component (12) formed of a silicon-containing material, and an assembly (10) formed thereby. The component (12) is supported and contacted by the support structure (14) so as to define a contact interface therebetween. An barrier coating (18) is present on the component (12) and/or the support structure (14), so as to be disposed at the contact interface to prevent direct physical contact between the silicon-containing material and the superalloy substrate.

## Description

The present invention generally relates to methods and coatings for alleviating reactions between components, such as the components of support structures in turbine sections of gas turbines. More particularly, this invention relates to methods and coatings for inhibiting diffusion of silicon from a silicon-containing component into a metallic component supporting the silicon-containing component.

Silicon-containing (Si-containing) monolithic ceramics and ceramic matrix composites (CMC's) are currently under development for high temperature components, such as combustors, shrouds, nozzles (vanes), and other hot stage components of industrial and aircraft gas turbines. Materials of particular interest include continuous fiber ceramic composite (CFCC) materials, as well as monolithic silicon nitride (Si₃N₄) and silicon carbide (SiC) materials. A notable example of a CFCC has been developed by the General Electric Company under the name HiPerComp®, and contains continuous silicon carbide fibers in a matrix of silicon carbide and silicon. In the applications under consideration, backside superalloy support structures will typically be required to support monolithic ceramic and CMC components. The resulting ceramic-superalloy interface must be capable of tolerating temperatures of up to 1100°C for long periods of time while physically maintaining intimate contact between the ceramic component and its superalloy support structure to avoid stressed-induced vibration.

Above about 1400°F (about 760°C), chemical compatibility of superalloys materials and Si-containing ceramics, in particular SiC fiber-reinforced SiC matrix composites, becomes an issue. Degradation has been observed in the physical properties of many nickel-base and cobalt-base superalloys when contacting Si-containing ceramics at high temperatures (e.g., about 900 to 1200°C) as a result of silicon (and, to a lesser extent, carbon) diffusion across the ceramic-superalloy interface. In the well-known Hastelloy X superalloy, contact with a Si-containing ceramic for 500 hours at a temperature of 900°C has been shown to result in silicon diffusion and the formation of brittle silicides to a depth of about twenty micrometers beneath the superalloy surface. Diffusion and silicide formation have been observed to increase to a depth of more than 40 mils (about one millimeter) if the same alloy is exposed for 120 hours to a temperature of about 1150°C. A number of complex reactions are potentially responsible for the precipitation of brittle silicide (and carbide) phases within a superalloy. In any event, such phases can act as sites for the initiation and propagation of cracks through the superalloy.

In view of the above, it would be desirable to prevent or at least inhibit the diffusion of silicon from a Si-containing ceramic component into a superalloy component that contacts the ceramic component, and inhibit reactions between the Si-containing ceramic and superalloy.

The present invention provides a method for inhibiting diffusion of silicon into a metallic support structure from a component formed of a silicon-containing material, and an assembly formed thereby. The invention is particularly directed to a component-support structure assembly that will be subjected to very high temperatures over extended periods, as is the case with various assemblies of gas turbines.

In the assembly of this invention, the component is supported and contacted by the support structure so as to define a contact interface therebetween. A barrier coating is present on the component and/or the support structure, so as to be disposed at the contact interface to prevent direct physical contact between the Si-containing component and a metallic substrate of the support structure. The barrier coating consists essentially of an oxide that is more thermally stable than silica, and inhibits diffusion of silicon from the Si-containing material into the metallic substrate.

In the method of this invention, the barrier coating is deposited on either or both of the component and support structure. The component is then attached to the support structure so that the component is supported and contacted by the support structure so as to define a contact interface between the component and a metallic substrate of the support structure. As a result of assembly, the barrier coating is disposed at the contact interface to prevent direct physical contact between the Si-containing material and the metallic substrate.

A significant advantage of this invention is that the barrier coating is effective to inhibit and substantially prevent diffusion of silicon from a Si-containing material, such as a monolithic ceramic or CMC, to a superalloy substrate contacted by the Si-containing material at temperatures of up to at least 1200°C. More particularly, the barrier coating inhibits the formation within a superalloy surface region of brittle silicide phases that can serve as sites for the initiation and propagation of cracks in the superalloy. As such, the invention is beneficial for components and support structures of the type used within the turbine sections of gas turbines, such as combustors, shrouds, nozzles (vanes), and other hot stage components of industrial and aircraft gas turbines.

Other objects and advantages of this invention will be better appreciated from the following description in which:

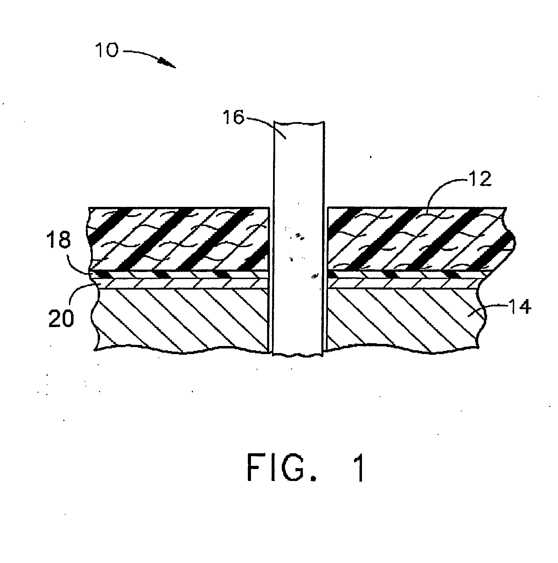

Figure 1 represents a cross-sectional view of a CMC component secured to a superalloy substrate in accordance with this invention.

Figure 1 represents a sectional view of an assembly 10 that includes a ceramic component 12 mounted to a support structure 14 with a pin 16. The component 12 may be a component of a gas turbine engine, such as a combustor liner or a shroud surrounding the outer blade tips within the turbine section of a gas turbine. Ceramic materials of particular interest are those containing silicon, such as Si-containing monolithic ceramics and CMC's containing silicon carbide as the reinforcement and/or matrix material, a specific example of the latter being the HiPerComp® CFCC developed by the General Electric Company and made up of continuous silicon carbide fibers in a matrix of silicon carbide and silicon. However, other silicon-containing materials are also within the scope of the invention, including monolithic ceramics such as silicon nitride and silicides (intermetallics) such as niobium silicide and molybdenum silicide. In one embodiment, the support structure 14 is formed of a high-temperature superalloy, particularly a nickel-base or cobalt-base superalloy containing chromium. While Figure 1 shows the ceramic component 12 and superalloy support structure 14 as being secured together with the pin 16, the pin 16 or other types of fasteners would not be a necessary component of ceramic-superalloy assemblies within the scope of this invention.

When heated to temperatures of about 1400°F (about 760°C) or more, free silicon and carbon within the component 12 tend to migrate from the component 12 and, if permitted, diffuse into the superalloy of the support structure 14, leading to a number of potential reactions that form brittle silicides and carbides in the surface region of the support structure 14. For example, penetration of silicon into nickel-base superalloys containing chromium can result in the formation of stable silicides such as NiSi, Ni₂Si, and Cr₃Si, which form numerous eutectic phases that may be molten at temperatures lower than those to which combustor and turbine components are subjected in their operating environments. In the reaction zone, marked increases in microhardness have been observed, resulting in subsurface embrittlement of the alloy. Even small amounts of silicon impurity in many superalloys can cause the precipitation of brittle Laves phases. Diffusion of carbon into a superalloy substrate can also be detrimental, resulting in the formation of carbides and leading to excess levels of carbon in the alloy that may cause the precipitation of brittle sigma phases. Consequently, the diffusion of silicon and carbon from the ceramic component 12 into the superalloy support structure 14, and the subsequent reaction of the diffused silicon and carbon within the structure 14, can present serious problems.

To prevent the above-noted detrimental reactions, the present invention makes use of a barrier layer 18 capable of inhibiting the diffusion of free silicon (and, to some degree, carbon) from Si-containing materials. Suitable materials for the barrier layer 18 are those that are at least as thermally stable as the oxide(s) that may be present on the component 12 or structure 14 and therefore contacted by the barrier layer 18. If deposited on the component 12, an example of a suitable material for the barrier layer 18 is mullite (3Al₂O₃-2SiO₂), which is more thermally stable than the silica inherently present on the surface of the Si-containing material of the component 12. Other suitable materials for the barrier layer 18 include rare earth silicates such as Y₂Si₂O₇, Y₂SiO₅, Lu₂Si₂O₇ and Lu₂SiO₅, alkaline earth silicates such as calcium silicate and barium silicate, and alkaline earth aluminosilicates such as barium-strontium aluminosilicate. A barrier layer 18 deposited directly on the component 12 may have a thickness of about 25 to about 150 micrometers. If deposited on the superalloy support structure 14, the barrier layer 18 may be alumina, stabilized zirconia, yttria, mullite, titania, or chromia, each of which is also more thermally stable than silica. If the barrier layer 18 is to be deposited on the support structure 14, an alumina-forming metallic coating 20 such as an MCrAIY (where M is iron, cobalt, and/or nickel, and X is yttrium or another rare earth or reactive element) is preferably first deposited to a thickness of about 25 to about 250 micrometers on the support structure 14 to minimize the thermal expansion mismatch between the oxide barrier layer 18 and the superalloy of the support structure 14. In this case, a preferred material for the barrier layer 18 is yttria-stabilized zirconia deposited to a thickness of about 25 to about 250 micrometers.

Leading up to the present invention, studies were undertaken that suggested a coating of alumina or yttria would be capable of serving as a barrier to the diffusion of silicon from a Si-containing ceramic into a superalloy contacting the ceramic. While their effectiveness as a diffusion barrier was noted, the coatings were found to not adhere well to the ceramic material during thermal cycling because of thermal mismatches, in some cases resulting in detachment and fracture of the coatings after a single thermal cycle.

In a subsequent investigation, a number of superalloy materials were evaluated with oxide coatings of different types to assess the capability of the coatings to inhibit the diffusion of silicon across Si-containing ceramic:superalloy couples subjected to temperatures in a range about 900°C to about 1200°C for durations of about 50 to about 1600 hours. For this investigation, coupons of the superalloy materials were formed to have approximate dimensions of 1 x 1/2 x 1/8 inch (about 25 x 13 x 3 mm). Surfaces of the coupons were polished using 600 grit SiC paper and then buffed to a mirror finish. Similarly-sized coupons of a Si-containing ceramic composite material containing silicon and silicon carbide formed by silicon melt infiltration were also prepared and polished. Such ceramic materials are also known as reaction-bonded silicon carbide, or Silcomp in the literature. These materials are representative of the matrix of SiC fiber-reinforced Si-SiC matrix composites made by melt infiltration (HiPerComp®). The alloy and ceramic coupons were pressed together and wrapped tightly with platinum-rhodium wire, and the resulting specimen assemblies were placed in alumina boats and heated in air at selected test temperatures. In some cases, the assemblies were heated in flowing helium to reduce the extent of oxidation resulting from the diffusion of air into the contact zone between the two coupons. The assemblies were subjected to the test temperatures for varying periods of time, after which the assemblies were sectioned and the interfacial reaction zones examined by standard metallographic techniques.

Additional specimen assemblies essentially identical to those described above were also prepared, but with the additional step of depositing an oxide coating on the superalloy coupons prior to mating of the coupons to form the specimen assemblies. The coatings were zirconia (ZrO₂) stabilized with about 8 weight percent yttria (Y₂O₃), titania (TiO₂), chromia (Cr₂O₃), and alumina (Al₂O₃) applied to thicknesses of about 4 to 5 mils (about 100 to 125 micrometers) by low pressure plasma spraying (LPPS). Prior to depositing the oxide coatings, a bond coat of NiCrAIY alloy was deposited to a thickness of about 1 to 2 mils (about 25 to 50 micrometers) directly on the superalloy coupon surface. As previously noted, the intended purpose of the NiCrAIY bond coats was to minimize the thermal expansion mismatches between the oxide coatings and their superalloy substrates.

In those specimens not provided with an oxide coating, reaction zones were found to have formed in the superalloy coupons at the completion of the high-temperature exposure. Table 1 summarizes the superalloys and the temperatures and durations at which they were evaluated, and the approximate penetration depths of silicide precipitates, as determined visually from micrographs. In each case, sectioning and examination of the contact zones of the superalloy and ceramic coupons evidenced that silicon had diffused from the ceramic coupons into the superalloy coupons, resulting in the formation of voids in the ceramic matrix of the ceramic material and precipitates within the superalloys.

**Table I**

| Superalloy | Duration (hr) | Temperature (°C) | Si Penetration (µm) | k (cm•s^{-1/2}) |
|---|---|---|---|---|
| Hastelloy X | 500 | 900 | 20 | 1.6 x 10⁻⁶ |
| | 1622 | 900 | 35 | 1.4 x 10⁻⁶ |
| | 100 | 1000 | 65 | 1.1 x 10⁻⁵ |
| | 672 | 1000 | 250 | 1.6 x 10⁻⁵ |
| | 500 | 1100 | >300 | >2.2 x 10⁻⁵ |
| | 120 | 1150 | 1100 | 1.7 x 10⁻⁴ |
| Inconel 718 | 120 | 1150 | 875 | 1.3 x 10⁻⁴ |
| René 80 | 1000 | 1000 | >140 | >7.5 x 10⁻⁶ |
| | 120 | 1150 | 1350 | 2.1 x 10⁻⁴ |
| Ni-50Cr | 120 | 1150 | 1200 | 1.8 x 10⁻⁴ |
| Ni-20Cr-10Ti | 140 | 1175 | ~1250 | >2.0 x 10⁻⁴ |

For a diffusion-controlled process such as what occurred in this investigation, a plot of penetration depth/(time)^{½} vs. reciprocal temperature should give a straight line, which can be used to predict approximate silicon penetration depths at intermediate temperatures. The results of the investigation appeared to follow this generalization, and indicated an apparent activation energy for the diffusion process of about 62 Kcal/mole. The observed migration of silicon into the evaluated superalloys inherently results in a loss of mechanical properties in the superalloys, such as low and high cycle fatigue life, rupture strength, and ductility. While the investigation did not indicate that the rate of silicon diffusion is a strong function of alloy composition, the extent of property degradation probably is. For example, Hastelloy X is a more ductile superalloy than, for example, René 80 and IN718, and hence the loss of properties would be expected to be correspondingly less severe in the former. Nevertheless, even with Hastelloy X, an embrittled zone having a depth of as little as about 10 mils (about 250 micrometers) would be considered unacceptable for many structural applications.

The details of the reaction at the interface between a ceramic material and a superalloy substrate appeared to depend in a complex manner on the composition of the particular superalloy. For example, the hemispherical reaction zones in the Ni-50Cr coupons were characterized by large voids, and appeared quite different from the more uniform attack and precipitation of fine silicide particles and acicular sigma phase observed in the IN718 coupons subjected to the same test exposure. In the Ni-Cr alloy, a molten silicide phase probably formed during testing, while the René 80 coupons formed a hemispherical reaction zone after only 120 hours at 1150°C and developed a network of fine silicide particles after 1000 hours of testing. A more catastrophic reaction zone appeared to develop in the ternary alloy Ni-20Cr-10Ti after 140 hours at 1170°C, characterized by the development of voids and porosity within the superalloy that were probably the result of molten silicide formation.

The specimens assembled with a superalloy coupon having an oxide coating were tested under similar conditions as those described above. The specific specimen combinations included yttria-stabilized zirconia (YSZ) on IN738 (about 1004 hours at about 900°C; about 600 hours at about 1000°C), YSZ on René 80 (about 552 hours at about 1000°C), alumina on Hastelloy X (about 672 hours at about 1000°C), chromia on Hastelloy X (about 672 hours at about 1000°C), titania on Hastelloy X (about 672 hours at about 1000°C), and alumina on Hastelloy X (about 500 hours at about 1100°C). Each of the specimens were sectioned and examined at the completion of the high temperature evaluation. Examination of the IN738 and René 80 specimens evidenced that none of these Si-containing ceramic:superalloy couples exhibited any evidence of silicon penetration through their YSZ coatings and into their superalloy substrates. Notably, the YSZ coatings were well adhered by the underlying NiCrAIY bond coat to their superalloy substrates.

The alumina, titania, and chromia coatings deposited on the Hastelloy X coupons remained intact during the high temperature tests, but disintegrated during metallographic mounting and sectioning. Nonetheless, all three oxide coating compositions proved to be effective in preventing the diffusion of silicon into their underlying superalloy substrates, as evidenced by no silicide formation beneath the coatings. EDS (energy dispersive spectrometry) element scans across the interfaces of TiO₂-coated and Cr₂O₃-coated Hastelloy X specimens subjected to about 900°C for about 1622 hours evidenced that silicon had not penetrated either oxide coating.

Based on the above, it was conjectured that, in addition to or instead of an oxide coating on the superalloy component of a ceramic:superalloy couple, an oxide coating deposited directly on the ceramic component could also be effective to inhibit silicon diffusion. However, limited oxides are candidates for this purpose as most have a higher thermal expansion coefficient than silicon carbide and hence would not remain adherent to a Si-containing ceramic during thermal cycling. Because its thermal expansion behavior closely matches silicon carbide, mullite (3Al₂O₃•2SiO₂; α = 5.1-5.4 x 10⁻⁶/°C between 25 and 1000°C) was selected as a diffusion barrier coating material for a second investigation. However, other oxide materials believed to be suitable include rare earth silicates such as Y₂Si₂O₇, Y₂SiO₅, Lu₂Si₂O₇ and Lu₂SiO₅, alkaline earth silicates such as calcium silicate and barium silicate, and alkaline earth aluminosilicates such as barium-strontium aluminosilicates. There are several oxides within these families that have expansion coefficients similar to silicon-containing ceramics, for example, stoichiometric barium-strontium aluminosilicate ((Ba_{0.75}Sr_{0.25})O-Al₂O₃-SiO₂).

Mullite coatings having thicknesses of about 10 mils (about 250 micrometers) were directly applied to surfaces of additional Si-containing ceramic composite coupons by air plasma spraying. No attempt was made to polish the mullite coatings before assembling the ceramic coupons with Hastelloy X coupons obtained for testing. The efficacy of these mullite coatings in reducing the diffusion of free silicon from the Si-containing ceramic coupons was determined by subjecting the assemblies to thermal exposures in a range of about 900 to about 1200°C, followed by metallographic examination and EDXA (energy dispersive x-ray analysis) analysis of cut sections of the assemblies.

A first specimen subjected to about 100 hours at about 1100°C exhibited a zone of Kirkendall voids resulting from the diffusion of chromium to the surface region of the Hastelloy X coupon. However, EDS analysis showed no evidence of the penetration of silicon into the superalloy. The mullite coating on the ceramic coupon was still intact after the test. An EDS profile beneath the surface of a second specimen held for about 100 hours at about 1200°C indicated the presence of a small amount of silicon on the coupon surface, but no silicon within the Hastelloy X superalloy itself.

In a separate investigation, additional superalloy coupons were provided with aluminide coatings prior to testing. The coupons were polished rectangular coupons of the nickel-base superalloys Inconel 718, Inconel 738, René 80, Udimet 500, and Udimet 700. The aluminide coatings were deposited using a pack cementation process that entailed embedding the superalloy coupons in a powder mixture having an approximate composition of 5.8% aluminum, 0.2% NH₄F, and 94% alumina. The coupons and powder mixture were heated in a covered retort to about 1050°C for about two hours in an atmosphere of argon. During this procedure, a diffusion coating of dense nickel aluminide β-NiAl was formed on all surfaces of the coupons to thicknesses of about 10 to about 100 micrometers. After removal from the powder mixture, the coated coupons were lightly polished to remove any adhering alumina particles, assembled with Si-containing Silcomp (Si-SiC) coupons, and held at about 1150°C for about 120 hours.

At the conclusion of the test, the aluminide coatings were found to have prevented the formation of brittle silicide phases in the underlying superalloy coupons. Because aluminide coatings grow a dense coherent layer of alumina on their surfaces, this alumina layer was concluded to have prevented migration of silicon across the superalloy-ceramic interface. Accordingly, it was concluded that, in addition to a deposited alumina layer, a thermally-grown alumina layer could effectively serve as an oxide barrier layer for purposes of this invention.

From the above, it was concluded that superalloys coupled with a Si-containing ceramic component and heated to temperatures of 900°C and above undergo silicon diffusion across the superalloy-ceramic interface, resulting in the formation of brittle silicides in the superalloy, with the depth of penetration largely dependent on temperature and time. Exposures of as little as 500 hours at 900°C resulted in silicon penetrating 20 micrometers, which is believed to be detrimental to the properties of the superalloy, especially if used as hot stage components of industrial gas turbines and aircraft gas turbine engines. Silicon diffusion was alleviated at temperatures of up to 1200°C by the application of YSZ, alumina, chromia, and titania diffusion barriers to the superalloy component and/or mullite to the Si-containing ceramic component, so that these oxide coatings are interposed between the superalloy and ceramic components.

While the invention has been described in terms of one or more particular embodiments, it is apparent that other forms could be adopted by one skilled in the art. Therefore, the scope of the invention is to be limited only by the following claims.

## Claims

1. An assembly (10) having a component (12) supported and contacted by a support structure (14) so as to define a contact interface therebetween, the component (12) being formed of a silicon-containing material and the support structure (14) has a superalloy substrate, **characterized in that** the assembly (10) comprises:
a barrier coating (18) on at least one of the component (12) and the support structure (14), the barrier coating (18) consisting essentially of an oxide that is more thermally stable than silica, the barrier coating (18) being disposed at the contact interface to prevent direct physical contact between the silicon-containing material and the superalloy substrate and inhibiting diffusion of silicon from the silicon-containing material into the superalloy substrate.

2. The assembly (10) according to claim 1, **characterized in that** the barrier coating (18) is chosen from the group consisting of alumina, stabilized zirconia, yttria, mullite, rare earth silicates, alkaline earth silicates, alkaline earth aluminosilicates, titania, and chromia.

3. The assembly (10) according to claim 1, **characterized in that** the barrier coating (18) is on and adheres to the support structure (14) and is formed of alumina, yttria-stabilized zirconia, or yttria.

4. The assembly (10) according to claim 3, further comprising an MCrAIY coating (20) between the barrier coating (18) and the superalloy substrate.

5. The assembly (10) according to claim 1, **characterized in that** barrier coating (18) is on and adheres to the component (12) and is formed of mullite, a rare earth silicate, an alkaline earth silicate, or an alkaline earth aluminosilicate.

6. The assembly (10) according to any preceding claim, **characterized in that** the silicon-containing material is chosen from the group consisting of silicon nitride, silicon carbide, niobium silicide, molybdenum silicide, and silicon carbide fibers in a matrix of silicon carbide and silicon.

7. The assembly (10) according to any preceding claim, **characterized in that** the superalloy substrate is formed of a nickel-base superalloy.

8. A method of inhibiting diffusion of silicon into a support structure (14) from a component (12) formed of a silicon-containing material, the method comprising the steps of:
depositing a barrier coating (18) on at least one of the component (12) and the support structure (14), the barrier coating (18) consisting essentially of an oxide that is more thermally stable than silica; and
attaching the component (12) to the support structure (14) so that the component (12) is supported and contacted by the support structure (14) so as to define a contact interface between the component (12) and a superalloy substrate of the support structure (14), the barrier coating (18) being disposed at the contact interface to prevent direct physical contact between the silicon-containing material and the superalloy substrate.

9. The method according to claim 8, **characterized in that** the barrier coating (18) is chosen from the group consisting of alumina, stabilized zirconia, yttria, mullite, rare earth silicates, alkaline earth silicates, alkaline earth aluminosilicates, titania, and chromia, and the silicon-containing material is chosen from the group consisting of silicon nitride, silicon carbide, niobium silicide, molybdenum silicide, and silicon carbide fibers in a matrix of silicon carbide and silicon.

10. The method according to claim 8 or claim 9, **characterized in that** the component (12) is a gas turbine component and the step of attaching the component (12) to the support structure (14) comprises installing the component (12) on the gas turbine.
